# DEMANDE DE BREVET EUROPEEN

(11) **EP 2 461 537 A1**
(43) Date de publication de la demande: **06.06.2012**
(21) Numéro de dépôt: 11192003.9
(22) Date de dépôt: 05.12.2011
(51) Int. Cl.: H04L 29/06, G06F 21/00

(54) **Gestion d'impression de documents confidentiels**

(30) Priorité: 06.12.2010 FR 1060113
(71) Demandeur: Alcatel Lucent, 75007 Paris (FR)
(72) Inventeur: Hebbar, Abdelkrim, 91620 NOZAY (FR); Stan, Johann, 92220 BAGNEUX (FR); Bataille, Fabien, 91620 NOZAY (FR)
(74) Mandataire: Mouney, Jérôme

(57) **Abrégé**

Pour gérer l'impression de documents confidentiels par au moins une imprimante (IMP) apte à communiquer avec plusieurs terminaux de communication (TC) dans un réseau de télécommunications (RT), un dispositif (DGI) mémorise, suite à une commande d'impression d'un document confidentiel par un utilisateur et une transmission du document et d'un identificateur (IdU) de l'utilisateur depuis un terminal de communication (TC), le document en correspondance avec l'identificateur (IdU) de l'utilisateur. Le dispositif reçoit un message (MesN) qui contient un identificateur (IdU) de l'utilisateur et qui est transmis par un système de détection, suite à une détection de l'utilisateur à proximité d'une imprimante (IMP) par le système de détection (SD), et transmet le document à l'imprimante (IMP) pour imprimer le document, si l'identificateur contenu dans le message (MesN) correspond à l'identificateur mémorisé en correspondance avec le document.

## Description

La présente invention concerne une gestion d'impression de documents confidentiels.

Actuellement, de nombreuses entreprises traitant des données confidentielles font face au problème de la protection des informations sensibles. La plupart des chartes de confidentialité en entreprise recommandent aux employés de prêter attention à la nature confidentielle de leurs activités.

Plusieurs situations critiques peuvent être distinguées dans lesquelles des mesures de protection sont requises :
- Participation à des réunions portant sur des sujets confidentiels
- Départ d'un lieu de travail
- Envoi de documents confidentiels par télécopie
- Impression de documents confidentiels par une imprimante partagée par plusieurs personnes.

Il existe des situations pour lesquelles les mesures de sécurité peuvent être facilement atteintes, par exemple en se déconnectant de son poste de travail lorsque l'utilisateur quitte son bureau, ou en fermant les portes dans une salle de réunion, ou encore en s'assurant que le destinataire de documents confidentiels envoyés par télécopie est bien à proximité du télécopieur. Par contre, il n'existe que des recommandations pour les utilisateurs qui impriment des documents confidentiels, par exemple s'assurer d'imprimer un document via une imprimante privée et sécurisée. Cependant, une entreprise possède généralement des imprimantes qui sont partagées entre les employés.

Un utilisateur ayant imprimé un document confidentiel sur une imprimante donnée peut seulement se dépêcher d'être à proximité de l'imprimante donnée et attendre l'impression du document. Certaines imprimantes peuvent être en outre équipées d'une sécurité demandant un code à l'utilisateur.

Il existe un besoin pour les entreprises de proposer aux employés une méthode sure et simple pour assurer un haut degré de sécurité et de confort lors de l'impression de documents confidentiels sur des imprimantes partagées entre plusieurs personnes.

Pour remédier aux inconvénients précédents, un procédé pour gérer l'impression de documents à caractère confidentiel par au moins une imprimante apte à communiquer avec plusieurs terminaux de communication dans un réseau de télécommunications, comprend les étapes suivantes dans un dispositif :
suite à une commande d'impression d'un document confidentiel par un utilisateur et une transmission du document et d'un identificateur de l'utilisateur depuis un terminal de communication, mémoriser le document en correspondance avec l'identificateur de l'utilisateur,
suite à une détection de l'utilisateur à proximité d'une imprimante par un système de détection, recevoir un message qui contient un identificateur de l'utilisateur et qui est transmis par le système de détection, et
si l'identificateur contenu dans le message correspond à l'identificateur mémorisé en correspondance avec le document, transmettre le document à l'imprimante pour imprimer le document.

Avantageusement, l'invention permet de gérer de manière naturelle et sécurisée l'impression de documents confidentiels dans une entreprise. L'imprimante est ainsi définie a posteriori lorsque l'utilisateur est proche de l'imprimante, et non pas a priori avant l'envoi de documents à imprimer.

Selon une autre caractéristique de l'invention, le dispositif peut chiffrer le document à mémoriser en correspondance avec l'identificateur de l'utilisateur, et déchiffrer le document avant de le transmettre à l'imprimante.

Selon une autre caractéristique de l'invention, le système de détection peut comprendre une borne interactive associée à l'imprimante, l'utilisateur étant invité à saisir un identificateur.

Selon une autre caractéristique de l'invention, le système de détection peut comprendre un détecteur couvrant une zone géographique dans laquelle est située l'imprimante, le détecteur étant apte à détecter la présence de l'utilisateur équipé d'un moyen d'identification dans la zone géographique via une communication sans fil avec le moyen d'identification qui transmet un identificateur de l'utilisateur.

Selon une autre caractéristique de l'invention, le moyen d'identification peut être intégré dans un badge ou un terminal mobile.

Selon une autre caractéristique de l'invention, le message peut contenir un identificateur de l'imprimante.

Selon une autre caractéristique de l'invention, le message peut contenir des données de contexte comprenant au moins une partie d'un ensemble d'informations comprenant la date et l'heure de détection de l'utilisateur, un nombre de fois que l'utilisateur a été détecté à proximité de l'imprimante pour l'impression d'un document donné, et un nombre de fois que l'utilisateur a refusé l'impression d'un document.

L'invention concerne également un dispositif pour gérer l'impression de documents à caractère confidentiel par au moins une imprimante apte à communiquer avec plusieurs terminaux de communication dans un réseau de télécommunications, le dispositif comprenant :
des moyens pour mémoriser, suite à une commande d'impression d'un document confidentiel par un utilisateur et une transmission du document et d'un identificateur de l'utilisateur depuis un terminal de communication, le document en correspondance avec l'identificateur de l'utilisateur,
des moyens pour recevoir un message qui contient un identificateur de l'utilisateur et qui est transmis par un système de détection, suite à une détection de l'utilisateur à proximité d'une imprimante par le système de détection, et
des moyens pour transmettre le document à l'imprimante pour imprimer le document, si l'identificateur contenu dans le message correspond à l'identificateur mémorisé en correspondance avec le document.

L'invention se rapporte encore à un programme d'ordinateur apte à être mis en oeuvre dans un dispositif, ledit programme comprenant des instructions qui, lorsque le programme est exécuté dans ledit dispositif, réalisent les étapes selon le procédé de l'invention.

La présente invention et les avantages qu'elle procure seront mieux compris au vu de la description ci-après faite en référence aux figures annexées, dans lesquelles :
- la figure 1 est un bloc-diagramme schématique d'un système de communication selon une réalisation de l'invention, et
- la figure 2 est un algorithme d'un procédé de gestion d'impression de documents confidentiels selon une réalisation de l'invention.

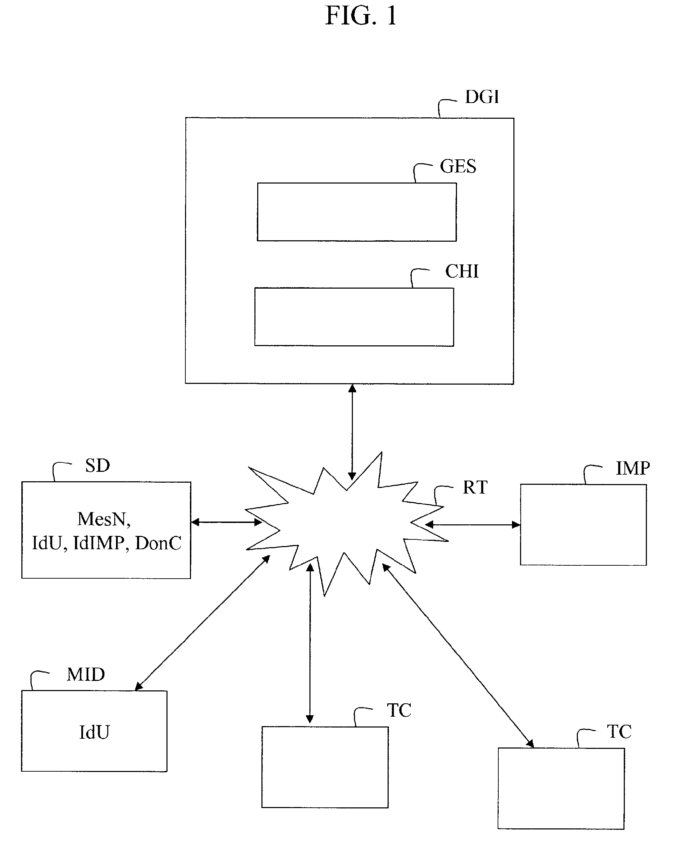

En référence à la figure 1, un système de communication comprend un système de détection SD, un dispositif de gestion d'impression DGI, au moins une imprimante IMP, et plusieurs terminaux de communication TC, aptes à communiquer entre eux à travers un réseau de télécommunications RT.

Le réseau de télécommunications RT peut être un réseau filaire ou sans fil, ou une combinaison de réseaux filaires et de réseaux sans fil.

Selon un exemple, le réseau de télécommunications RT est un réseau de paquets à haut débit de type IP ("Internet Protocol" en anglais), tel que l'internet ou un intranet.

Selon un exemple, un terminal de communication TC est un ordinateur personnel relié directement par modem à une liaison de type xDSL ("Digital Subscriber Line" en anglais) ou RNIS (Réseau Numérique à Intégration de Services) reliée au réseau de télécommunications RT.

Selon un autre exemple, un terminal de communication TC est un terminal de radiocommunications cellulaire mobile, relié par un canal de radiocommunication au réseau de télécommunications, par exemple de type GSM ("Global System for Mobile communications" en anglais) ou UMTS ("Universal Mobile Telecommunications System" en anglais).

Selon un autre exemple, un terminal de communication TC comprend un dispositif ou objet électronique de télécommunications qui est personnel à l'utilisateur et qui peut être un assistant numérique personnel communicant PDA ("Personnal Digital Assistant" en anglais), ou un téléphone intelligent (SmartPhone), pouvant être relié à une borne d'accès d'un réseau public sans fil de faible portée du type WLAN ("Wireless Local Area Network" en anglais) ou conforme à l'une des normes 802.1x, ou de moyenne portée selon le protocole WIMAX ("World wide Interoperability Microwave Access" en anglais), relié au réseau de télécommunications.

L'imprimante IMP peut être une imprimante multifonction qui est accessible et partagée par plusieurs personnes, notamment utilisateurs de terminaux de communication TC aptes à communiquer avec l'imprimante pour commander l'impression de documents. Il est considéré que l'imprimante est située dans une zone géographique donnée. A titre d'exemple, la zone géographique peut correspondre à une salle dans laquelle est installée l'imprimante, ou peut définir une surface donnée de quelques mètres carrés. La zone géographique peut être définie de manière à ce qu'il existe une forte probabilité que l'entrée d'un utilisateur dans cette zone signifie que l'utilisateur a l'intention d'aller à l'imprimante.

Le système de détection SD comprend un ensemble de détecteurs de présence couvrant une zone géographique donnée dans laquelle est située l'imprimante IMP. Un détecteur est apte à détecter la présence d'un utilisateur équipé d'un moyen d'identification MID dans la zone géographique donnée.

Selon un mode de réalisation, un moyen d'identification MID est compris dans un dispositif portable équipé d'une liaison sans fil. Ainsi le moyen d'identification peut communiquer par cette liaison sans fil avec les détecteurs du système de détection SD. Le moyen d'identification MID peut encore être adjoint sous forme d'un module à un dispositif portable existant tel un téléphone portable, un bipper, un PDA, etc, dont il peut avantageusement réutiliser une liaison sans fil existante. Dans ce cas, le système de détection SD peut comprendre un ensemble de détecteurs qui sont des antennes couvrant la zone géographique et permettant de localiser le moyen d'identification MID.

Selon un autre mode de réalisation, le moyen d'identification MID comprend une étiquette RFID ("Radio Frequency Identifier" en anglais). Une telle étiquette RFID est un composant passif pouvant contenir des données stockées et pouvant être lu à distance et sans contact par un lecteur adapté du système de détection SD. Ceci permet avantageusement de réaliser un moyen d'identification de taille très réduite. Cette taille réduite facilite son utilisation et son intégration. Dans ce cas, un détecteur du système de détection SD peut être une un lecteur RFID installé dans la zone géographique.

Selon un autre mode de réalisation, le moyen d'identification MID est intégré dans un badge. Ceci est avantageux puisque, dans de nombreux environnements, le port du badge est généralisé et étendu à toute personne, rattachée ou non à l'environnement. Dans ce cas, un détecteur du système de détection SD peut être une un lecteur de badge qui est une borne d'accès à la zone géographique.

Le moyen d'identification MID peut encore être intégré dans un équipement déjà porté par une personne/utilisateur, tel un terminal portable. Ainsi une modification d'un téléphone portable pour lui adjoindre un moyen d'identification MID, améliore l'acceptation par la personne et garantit plus efficacement le port par la personne dudit moyen d'identification MID. Une telle intégration est plus adaptée aux personnes rattachées à l'environnement. Il est envisageable d'appliquer une solution composite avec un badge pour les personnes extérieures et intégrée au terminal portable pour les personnes rattachées à l'environnement.

Lorsqu'un détecteur du système de détection SD détecte la présence d'un utilisateur dans la zone géographique, le moyen d'identification MID transmet un identificateur IdU de l'utilisateur au système de détection SD, qui transmet ensuite un message, appelé message de notification MesN par la suite, dans un format prédéfini au dispositif de gestion d'impression DGI.

Dans une variante, le système de détection SD peut être limité à une borne interactive associé à chaque imprimante, la borne permettant à un utilisateur de transmettre son identificateur IdU, par exemple en saisissant son nom et un code. Lorsqu'un utilisateur transmet son identificateur IdU à la borne associée à l'imprimante, l'utilisateur est considéré détecté à proximité de l'imprimante par le système de détection.

Le message MesN contient un identificateur IdIMP de l'imprimante IMP située dans la zone géographique donnée associée au détecteur de présence, un identificateur IdU de l'utilisateur, et optionnellement des données de contexte DonC.

Selon un exemple, le détecteur de présence peut être une borne d'accès à une zone géographique et les données de contexte DonC sont relatives à la date et l'heure d'identification du badge RFID de l'utilisateur ainsi qu'au nombre de fois que l'utilisateur a été détecté à proximité de l'imprimante pour l'impression d'un document donné.

Le dispositif de gestion d'impression DGI comprend un module de chiffrement CHI et un module de gestion GES.

Dans la suite de la description, le terme module peut désigner un dispositif, un logiciel ou une combinaison de matériel informatique et de logiciel, configuré pour exécuter au moins une tâche particulière.

Le module de chiffrement CHI chiffre un document qui a été transmis par un terminal de communication TC afin d'être imprimé. La fonction de chiffrement du module CHI est optionnelle.

Le module de gestion GES mémorise un document, éventuellement chiffré, en correspondance avec un identificateur IdU de l'utilisateur ayant commandé l'impression du document.

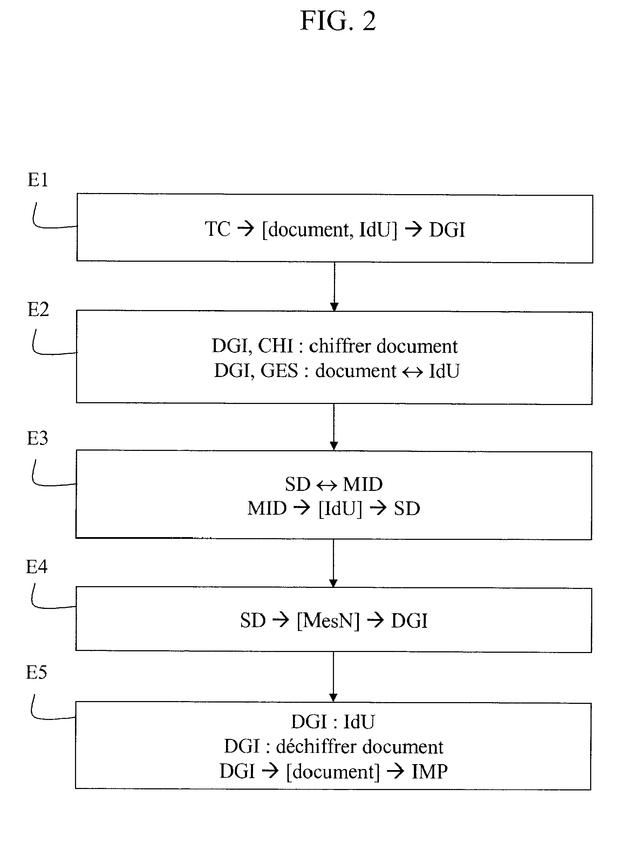

En référence à la figure 2, un procédé de gestion d'impression de documents confidentiels selon une réalisation de l'invention comprend des étapes E1 à E5 exécutées dans le système de communication.

A l'étape E1, l'utilisateur souhaite imprimer un document depuis son terminal de communication TC, le document étant considéré confidentiel par l'utilisateur qui ne souhaite pas qu'une autre personne accède au document imprimé. Par exemple, l'utilisateur sélectionne une option d'impression confidentielle dans un menu d'impression du document via une interface graphique du terminal de communication TC.

Le terminal TC transmet une commande d'impression du document au dispositif de gestion d'impression DGI.

Le terminal TC transmet en outre le document à imprimer et un identificateur IdU de l'utilisateur au dispositif de gestion d'impression DGI.

A l'étape E2, le dispositif de gestion d'impression DGI chiffre éventuellement le document reçu et mémorise l'identificateur IdU reçu en correspondance avec le document éventuellement chiffré.

Le dispositif d'impression DGI est alors en attente de réception d'une notification de la part du système de détection SD, indiquant la présence de l'utilisateur à proximité d'une imprimante IMP.

A l'étape E3, l'utilisateur, équipé d'un moyen d'identification MID, souhaite récupérer le document à imprimer et se déplace en direction d'une imprimante IMP.

Lorsque l'utilisateur entre dans la zone géographique dans laquelle est située l'imprimante IMP, le système de détection SD détecte la présence de l'utilisateur dans la zone géographique par une communication avec le moyen d'identification MID de l'utilisateur et demande une confirmation d'impression du document à l'utilisateur.

Si l'utilisateur a commandé l'impression de plusieurs documents, le système de détection SD peut demander à l'utilisateur une confirmation d'impression pour chaque document ou pour l'ensemble des documents.

Si l'utilisateur confirme l'impression, le moyen d'identification MID transmet un identificateur IdU de l'utilisateur au système de détection SD, avec la réponse contenant la confirmation de l'utilisateur, éventuellement avec un identificateur du document à imprimer dans le cas où plusieurs documents sont en attente d'impression.

Dans une variante, le système de détection SD comprend une borne interactive associé à chaque imprimante, la borne permettant à un utilisateur de transmettre son identificateur IdU, par exemple en saisissant son nom et un code.

A l'étape E4, le système de détection SD transmet un message de notification MesN au dispositif de gestion d'impression DGI, le message MesN contenant un identificateur IdIMP de l'imprimante IMP, un identificateur IdU de l'utilisateur, et optionnellement des données de contexte DonC. Le message MesN peut contenir également un identificateur du document à imprimer dans le cas où plusieurs documents sont en attente d'impression.

A titre d'exemples, les données de contexte DonC contiennent la date et l'heure de détection de l'utilisateur, un nombre de fois que l'utilisateur a été détecté à proximité de l'imprimante pour l'impression d'un document donné, ou encore un nombre de fois que l'utilisateur a refusé l'impression d'un document.

Selon une réalisation, le dispositif DGI peut annuler l'impression d'un document à l'expiration d'un délai prédéterminé suivant la commande d'impression du document, ou si l'impression d'un document a été refusée plusieurs fois par l'utilisateur au-delà d'un nombre prédéterminé.

A l'étape E5, le dispositif de gestion d'impression DGI vérifie si l'identificateur IdU de l'utilisateur reçu dans le message MesN correspond à l'identificateur d'utilisateur précédemment mémorisé en correspondance avec le document chiffré.

Si les identificateurs correspondent, le dispositif DGI déchiffre le document chiffré, si ce dernier était chiffré.

Le dispositif de gestion d'impression DGI transmet le document à l'imprimante IMP, identifiée au moyen de l'identificateur IdIMP de l'imprimante, afin que cette dernière imprime le document. L'utilisateur, situé à proximité de l'imprimante IMP, peut alors récupérer le document imprimé. Ainsi, le document nouvellement imprimé n'a pas pu être lu ou accédé par une autre personne, du moins sans que l'utilisateur en ai eu connaissance.

L'invention décrite ici concerne un procédé et un dispositif de gestion d'impression de documents confidentiels. Selon une implémentation de l'invention, les étapes du procédé de l'invention sont déterminées par les instructions d'un programme d'ordinateur incorporé dans un dispositif, tel que le dispositif DGI. Le programme comporte des instructions de programme, qui lorsque ledit programme est chargé et exécuté dans le dispositif, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour gérer l'impression de documents à caractère confidentiel par au moins une imprimante (IMP) apte à communiquer avec plusieurs terminaux de communication (TC) dans un réseau de télécommunications (RT), le procédé comprenant les étapes suivantes dans un dispositif (DGI) :
suite à une commande d'impression d'un document confidentiel par un utilisateur et une transmission du document et d'un identificateur (IdU) de l'utilisateur depuis un terminal de communication (TC), mémoriser (E1) le document en correspondance avec l'identificateur (IdU) de l'utilisateur,
suite à une détection de l'utilisateur à proximité d'une imprimante (IMP) par un système de détection (SD), recevoir (E4) un message (MesN) qui contient un identificateur (IdU) de l'utilisateur et qui est transmis par le système de détection, et
si l'identificateur contenu dans le message (MesN) correspond à l'identificateur mémorisé en correspondance avec le document, transmettre (E5) le document à l'imprimante (IMP) pour imprimer le document.

2. Procédé conforme à la revendication 1, selon lequel le dispositif (DGI) chiffre le document à mémoriser en correspondance avec l'identificateur (IdU) de l'utilisateur, et déchiffre le document avant de le transmettre à l'imprimante (IMP).

3. Procédé conforme à la revendication 1 ou 2, selon lequel le système de détection (SD) comprend une borne interactive associée à l'imprimante, l'utilisateur étant invité à saisir un identificateur (IdU).

4. Procédé conforme à la revendication 1 ou 2, selon lequel le système de détection (SD) comprend un détecteur couvrant une zone géographique dans laquelle est située l'imprimante, le détecteur étant apte à détecter la présence de l'utilisateur équipé d'un moyen d'identification (MID) dans la zone géographique via une communication sans fil avec le moyen d'identification (MID) qui transmet un identificateur (IdU) de l'utilisateur.

5. Procédé conforme à la revendication 4, selon lequel le moyen d'identification (MID) est intégré dans un badge.

6. Procédé conforme à la revendication 4, selon lequel le moyen d'identification (MID) est intégré dans un terminal mobile.

7. Procédé conforme à l'une des revendications 1 à 6, selon lequel le message (MesN) contient un identificateur de l'imprimante (IdIMP).

8. Procédé conforme à l'une des revendications 1 à 7, selon lequel le message (MesN) contient des données de contexte (DonC) comprenant au moins une partie d'un ensemble d'informations comprenant la date et l'heure de détection de l'utilisateur, un nombre de fois que l'utilisateur a été détecté à proximité de l'imprimante pour l'impression d'un document donné, et un nombre de fois que l'utilisateur a refusé l'impression d'un document.

9. Dispositif (DGI) pour gérer l'impression de documents à caractère confidentiel par au moins une imprimante (IMP) apte à communiquer avec plusieurs terminaux de communication (TC) dans un réseau de télécommunications (RT), le dispositif comprenant :
des moyens (GES) pour mémoriser, suite à une commande d'impression d'un document confidentiel par un utilisateur et une transmission du document et d'un identificateur (IdU) de l'utilisateur depuis un terminal de communication (TC), le document en correspondance avec l'identificateur (IdU) de l'utilisateur,
des moyens (GES) pour recevoir un message (MesN) qui contient un identificateur (IdU) de l'utilisateur et qui est transmis par un système de détection, suite à une détection de l'utilisateur à proximité d'une imprimante (IMP) par le système de détection (SD), et
des moyens (GES) pour transmettre le document à l'imprimante (IMP) pour imprimer le document, si l'identificateur contenu dans le message (MesN) correspond à l'identificateur mémorisé en correspondance avec le document.

10. Programme d'ordinateur apte à être mis en oeuvre dans un dispositif (DGI) pour gérer l'impression de documents à caractère confidentiel par au moins une imprimante (IMP) apte à communiquer avec plusieurs terminaux de communication (TC) dans un réseau de télécommunications (RT), ledit programme comprenant des instructions qui, lorsque le programme est chargé et exécuté dans ledit dispositif, réalisent les étapes suivantes :
suite à une commande d'impression d'un document confidentiel par un utilisateur et une transmission du document et d'un identificateur (IdU) de l'utilisateur depuis un terminal de communication (TC), mémoriser (E1) le document en correspondance avec l'identificateur (IdU) de l'utilisateur,
suite à une détection de l'utilisateur à proximité d'une imprimante (IMP) par un système de détection (SD), recevoir (E4) un message (MesN) qui contient un identificateur (IdU) de l'utilisateur et qui est transmis par le système de détection, et
si l'identificateur contenu dans le message (MesN) correspond à l'identificateur mémorisé en correspondance avec le document, transmettre (E5) le document à l'imprimante (IMP) pour imprimer le document.
